# FASCICULE DE BREVET EUROPEEN

(11) **EP 1 603 657 B1**
(45) Date de publication et mention de la délivrance du brevet: **26.05.2021**
(21) Numéro de dépôt: 04721216.2
(22) Date de dépôt: 17.03.2004
(51) Int. Cl.: B01D 53/94, B01J 23/10, B01J 23/63, B01J 35/10, B01J 37/03, B01J 23/00, C01G 25/00

(54) **COMPOSITIONS À BASE D'UN OXYDE DE CÉRIUM, D'UN OXYDE DE ZIRCONIUM ET, ÉVENTUELLEMENT D'UN OXYDE D'UNE AUTRE TERRE RARE, À SURFACE SPÉCIFIQUE ÉLEVÉE À 1100° C, LEUR PROCÉDÉ DE PRÉPARATION ET LEUR UTILISATION COMME CATALYSEUR**
ZUSAMMENSETZUNG AUF BASIS VON CEROXID UND ZIRCONIUMOXID UND EVENTUELL EINEM ANDEREN OXID DER SELTENEN ERDEN, DIE EINE HOHE SPEZIFISCHE OBERFLÄCHE BEI 1100 °C HAT, SOWIE EIN PROZEß ZU DEREN HERSTELLUNG UND VERWENDUNG ALS KATALYSATOR
COMPOSITIONS BASED ON CERIUM OXIDE, ZIRCONIUM OXIDE AND, OPTIONALLY, ANOTHER RARE EARTH OXIDE, HAVING A SPECIFIC RAISED SURFACE AT 1100°C, METHOD FOR THE PRODUCTION AND USE THEREOF AS A CATALYST

(30) Priorité: 18.03.2003 FR 0303292
(43) Date de publication de la demande: 14.12.2005
(73) Titulaire: Rhodia Operations, 93300 Aubervilliers (FR)
(72) Inventeur: LARCHER, Olivier, 17180 Pérégny (FR); ROHART, Emmanuel, 17220 Sainte-Soulle (FR)
(74) Mandataire: Senninger, Thierry
(86) Numéro de dépôt international: PCT/FR2004/000648
(87) Numéro de publication internationale: WO 2004/085039

(56) Documents cités:
- EP-A- 0 778 071
- EP-A- 0 955 267
- EP-A- 1 035 074
- WO-A-98/45212
- FR-A- 2 829 129

## Description

La présente invention concerne des compositions à base d'un oxyde de cérium, d'un oxyde de zirconium et, éventuellement d'un oxyde d'une autre terre rare, à surface spécifique élevée, leur procédé de préparation et leur utilisation comme catalyseur.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies"). L'oxyde de zirconium et l'oxyde de cérium apparaissent aujourd'hui comme deux constituants particulièrement importants et intéressants pour ce type de catalyseurs. Pour être efficaces, ces catalyseurs doivent présenter une surface spécifique importante même à température élevée.

Il existe un besoin en catalyseurs susceptibles de pouvoir être utilisés à des températures de plus en plus élevées et, pour cela, présentant une grande stabilité de leur surface spécifique.

EP 0778071 décrit des compositions à base d'oxyde de cérium et d'oxyde de zirconium présentant des surfaces inférieures à 15 m²/g après calcination à 1100°C. FR 2829129 décrit des compositions à base d'au d'oxyde de cérium, d'oxyde de zirconium et d'un oxyde d'une autre terre rare présentant des surfaces inférieures à 15 m²/g après calcination à 1100°C. WO 98/45212 décrit des compositions à base d'oxyde de cérium et d'oxyde de zirconium présentant des surfaces inférieures à 15 m²/g après calcination à 1100°C.

L'objet de l'invention est donc la mise au point d'une composition catalytique pouvant répondre à ce besoin.

Dans ce but, **la composition est telle que définie à la revendication 1.**

L'invention concerne aussi un procédé de préparation de telles compositions qui est caractérisé en ce qu'il comprend les étapes suivantes:
- (a) on forme un mélange comprenant des composés du cérium, du zirconium et, le cas échéant, de la terre rare précitée;
- (b) on met en présence ledit mélange avec un composé basique ce par quoi on obtient un précipité;
- (c) on chauffe en milieu aqueux ledit précipité à une température d'au moins 100°C;
- (d) on ajoute au précipité obtenu à l'étape précédente un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e) on calcine le précipité ainsi obtenu.

Comme cela a été mentionné plus haut, les compositions de l'invention présentent des valeurs de surface spécifique importantes même après calcination à une température élevée de 1100°C.

D'autres caractéristiques, détails et avantages de l'invention apparaîtront encore plus complètement à la lecture de la description qui va suivre, ainsi que d'exemples concrets mais non limitatifs destinés à l'illustrer.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

En outre, les calcinations à l'issue desquelles sont données les valeurs de surface sont des calcinations sous air.

Par terre rare on entend les éléments du groupe constitué par l'yttrium et les éléments de la classification périodique de numéro atomique compris inclusivement entre 57 et 71.

Les teneurs sont données en oxydes sauf indication contraire. L'oxyde de cérium est sous forme d'oxyde cérique.

On précise pour la suite de la description que, sauf indication contraire, dans les fourchettes de valeurs qui sont données, les valeurs aux bornes sont incluses.

Les compositions de l'invention se présentent selon deux modes de réalisation qui diffèrent par la nature de leurs constituants. Selon le premier mode, ces compositions consistent essentiellement en de l'oxyde de cérium et de l'oxyde de zirconium. On entend par là que la composition ne contient pas d'autre oxyde d'un autre élément qui puisse être un stabilisant de la surface de celle-ci sous forme d'une terre rare autre que le cérium.

Dans le cas du premier mode la quantité d'oxyde de cérium dans la composition est telle que le rapport atomique Ce/Zr est d'au moins 1, ce qui correspond à une proportion en masse en oxyde de cérium par rapport à l'ensemble de la composition d'au moins 58%. Cette proportion peut être plus particulièrement comprise entre 58% et 80% environ et encore plus particulièrement entre 58% et 70% environ.

Comme indiqué plus haut les compositions selon ce premier mode présentent après calcination 4 heures à 1100°C une surface qui est d'au moins 15 m²/g. Par ailleurs, après calcination 4 heures à 1200°C, ces mêmes compositions peuvent présenter encore une surface spécifique d'au moins 2 m²/g de préférence d'au moins 3 m²/g et encore plus particulièrement d'au moins 4 m²/g.

Ces mêmes compositions peuvent présenter encore une surface spécifique d'au moins 45 m²/g après calcination 4 heures à 900°C. Elles peuvent enfin présenter une surface spécifique d'au moins 20 m²/g après calcination 4 heures à 1000°C, de préférence d'au moins 25 m²/g.

Dans le cas du second mode de réalisation de l'invention, les compositions sont à base d'oxyde de cérium, d'oxyde de zirconium et d'au moins un oxyde d'une terre rare autre que le cérium. Il s'agit donc dans ce cas de compositions qui contiennent au moins trois oxydes et, plus particulièrement, quatre. La terre rare autre que le cérium peut être notamment choisie parmi l'yttrium, le lanthane, le néodyme et le praséodyme et leur combinaison. On peut citer ainsi plus particulièrement comme compositions selon ce second mode celles à base d'oxyde de cérium, d'oxyde de zirconium et d'oxyde de lanthane, celles à base d'oxyde de cérium, d'oxyde de zirconium, d'oxyde de lanthane et d'oxyde de néodyme et celles à base d'oxyde de cérium, d'oxyde de zirconium, d'oxyde de lanthane et d'oxyde de praséodyme.

Toujours dans le cas de ce second mode, la teneur en oxyde de la terre rare autre que le cérium est généralement d'au plus 35% en masse, notamment d'au plus 20%, par rapport à l'ensemble de la composition. Cette teneur peut être plus particulièrement d'au plus 15% et encore plus particulièrement d'au plus 10%. Elle est aussi habituellement d'au moins 1% et plus particulièrement d'au moins 5%.

Les teneurs respectives en cérium et en zirconium dans les compositions de ce second type sont telles que le rapport atomique Ce/Zr est d'au moins 1 ce qui correspond, comme indiqué précédemment, à une proportion en masse en oxyde de cérium par rapport à l'ensemble de la composition d'au moins 58%. Cette proportion peut être ici plus particulièrement comprise entre 58% et 90% environ et encore plus particulièrement entre 58% et 70% environ.

Les compositions du second mode présentent une surface spécifique après calcination 4 heures à 1100°C d'au moins 19 m²/g. Cette surface peut être plus particulièrement d'au moins 21 m²/g.

En outre, après calcination 4 heures à 1200°C, ces mêmes compositions peuvent présenter encore une surface spécifique d'au moins 3 m²/g de préférence d'au moins 4 m²/g et encore plus particulièrement d'au plus 6 m²/g.

Ces mêmes compositions peuvent présenter encore une surface spécifique d'au moins 60 m²/g, plus particulièrement d'au moins 65 m²/g après calcination 4 heures à 900°C. Elles peuvent enfin présenter une surface spécifique d'au moins 35 m²/g après calcination 4 heures à 1000°C, de préférence d'au moins 40 m²/g.

Selon une autre caractéristique, les compositions peuvent se présenter avantageusement sous forme d'une solution solide. Les spectres en diffraction X de ces compositions révèlent dans ce cas, au sein de ces dernières, l'existence d'une seule phase pure ou homogène. Cette phase correspond en fait à une structure cristalline de type fluorine tout comme l'oxyde cérique CeO₂ cristallisé, et dont les paramètres de mailles sont plus ou moins décalés par rapport à un oxyde cérique pur, traduisant ainsi l'incorporation du zirconium et, le cas échéant, de l'autre terre rare dans le réseau cristallin de l'oxyde de cérium, et donc l'obtention d'une solution solide vraie. Dans le cas des compositions du premier mode de réalisation, cette phase pure est conservée jusqu'à une température de 1000°C. Elle est conservée jusqu'à une température de 1100°C pour les compositions du second mode.

Le procédé de préparation des compositions de l'invention va maintenant être décrit.

Ce procédé est caractérisé en ce qu'il comprend les étapes suivantes :
- (a) on forme un mélange comprenant des composés du cérium, du zirconium et, le cas échéant, de la terre rare précitée;
- (b) on met en présence ledit mélange avec un composé basique ce par quoi on obtient un précipité;
- (c) on chauffe en milieu aqueux ledit précipité à une température d'au moins 100°C;
- (d) on ajoute au précipité obtenu à l'étape précédente un additif, choisi parmi les tensioactifs anioniques, les tensioactifs non ioniques, les polyéthylène-glycols glycols, les acides carboxyliques et leurs sels et les tensioactifs du type éthoxylats d'alcools gras carboxyméthylés;
- (e) on calcine le précipité ainsi obtenu.

La première étape (a) du procédé consiste donc à préparer un mélange en milieu liquide d'un composé du zirconium, d'un composé du cérium et éventuellement d'au moins un composé de la terre rare précitée supplémentaire.

Le mélange se fait généralement dans un milieu liquide qui est l'eau de préférence.

Les composés sont de préférence des composés solubles. Ce peut être notamment des sels de zirconium, de cérium et de lanthanide. Ces composés peuvent être choisis parmi les nitrates, les sulfates, les acétates, les chlorures, les nitrates céri-ammoniacaux.

A titre d'exemples, on peut ainsi citer le sulfate de zirconium, le nitrate de zirconyle ou le chlorure de zirconyle. Le nitrate de zirconyle est utilisé le plus généralement. On peut citer aussi notamment les sels de cérium IV tels que nitrates ou nitrates céri-ammoniacaux par exemple, qui conviennent ici particulièrement bien. De préférence, on utilise du nitrate cérique. Il est avantageux d'utiliser des sels de pureté d'au moins 99,5% et plus particulièrement d'au moins 99,9%. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée. On peut également, de préférence, utiliser une solution de nitrate cérique obtenue selon le procédé d'oxydation électrolytique d'une solution de nitrate céreux tel que décrit dans le document FR-A- 2 570 087, et qui constitue ici une matière première intéressante.

On notera ici que les solutions aqueuses de sels de cérium et de sels de zirconyle peuvent présenter une certaine acidité libre initiale qui peut être ajustée par l'addition d'une base ou d'un acide. Il est cependant autant possible de mettre en œuvre une solution initiale de sels de cérium et de zirconium présentant effectivement une certaine acidité libre comme mentionné ci-dessus, que des solutions qui auront été préalablement neutralisées de façon plus ou moins poussée. Cette neutralisation peut se faire par addition d'un composé basique au mélange précité de manière à limiter cette acidité. Ce composé basique peut être par exemple une solution d'ammoniaque ou encore d'hydroxydes d'alcalins (sodium, potassium,...), mais de préférence une solution d'ammoniaque.

On notera enfin que lorsque le mélange de départ contient du cérium sous forme III, il est préférable de faire intervenir dans le cours du procédé un agent oxydant, par exemple de l'eau oxygénée. Cet agent oxydant peut être utilisé en étant ajouté au milieu réactionnel lors de l'étape (a) ou lors de l'étape (b), notamment à la fin de celle-ci.

Il est aussi possible d'utiliser un sol comme composé de départ du zirconium ou du cérium. Par sol on désigne tout système constitué de fines particules solides de dimensions colloïdales, c'est à dire des dimensions comprises entre environ 1nm et environ 500nm, à base d'un composé de zirconium ou de cérium ce composé étant généralement un oxyde et/ou un oxyde hydraté de zirconium ou de cérium, en suspension dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums. On notera que dans un tel sol, le zirconium ou le cérium peuvent se trouver soit totalement sous la forme de colloïdes, soit simultanément sous la forme d'ions et sous la forme de colloïdes.

Le mélange peut être indifféremment obtenu soit à partir de composés initialement à l'état solide que l'on introduira par la suite dans un pied de cuve d'eau par exemple, soit encore directement à partir de solutions de ces composés puis mélange, dans un ordre quelconque, desdites solutions.

Dans la deuxième étape (b) du procédé, on met en présence ledit mélange avec un composé basique. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée.

La manière d'effectuer la mise en présence du mélange et de la solution, c'est à dire l'ordre d'introduction de ceux-ci n'est pas critique. Toutefois, cette mise en présence peut se faire en introduisant le mélange dans la solution du composé basique. Cette variante est préférable pour obtenir les compositions sous forme de solutions solides.

La mise en présence ou la réaction entre le mélange et la solution, notamment l'addition du mélange dans la solution du composé basique, peut être effectuée en une seule fois, graduellement ou en continu, et elle est de préférence réalisée sous agitation. Elle est de préférence conduite à température ambiante.

L'étape suivante (c) du procédé est l'étape de chauffage du précipité en milieu aqueux.

Ce chauffage peut être réalisé directement sur le milieu réactionnel obtenu après réaction avec le composé basique ou sur une suspension obtenue après séparation du précipité du milieu réactionnel, lavage éventuel et remise dans l'eau du précipité. La température à laquelle est chauffé le milieu est d'au moins 100°C et encore plus particulièrement d'au moins 130°C. L'opération de chauffage peut être conduite en introduisant le milieu liquide dans une enceinte close (réacteur fermé du type autoclave). Dans les conditions de températures données ci-dessus, et en milieu aqueux, on peut ainsi préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). On peut aussi effectuer le chauffage dans un réacteur ouvert pour les températures voisines de 100°C.

Le chauffage peut être conduit soit sous air, soit sous atmosphère de gaz inerte, de préférence l'azote.

La durée du chauffage peut varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

Le milieu soumis au chauffage présente généralement un pH d'au moins 5. De préférence, ce pH est basique, c'est à dire qu'il est supérieur à 7 et, plus particulièrement, d'au moins 8.

Il est possible de faire plusieurs chauffages. Ainsi, on peut remettre en suspension dans l'eau, le précipité obtenu après l'étape de chauffage et éventuellement un lavage puis effectuer un autre chauffage du milieu ainsi obtenu. Cet autre chauffage se fait dans les mêmes conditions que celles qui ont été décrites pour le premier.

L'étape suivante (d) du procédé consiste à ajouter au précipité issu de l'étape précédente un additif qui est choisi parmi les tensioactifs anioniques, les tensioactifs non ioniques, les polyéthylène-glycols et les acides carboxyliques et leurs sels.

En ce qui concerne cet additif on pourra se référer à l'enseignement de la demande WO-98/45212 et utiliser les tensioactifs décrits dans ce document.

On peut mentionner comme tensioactifs du type anionique les éthoxycarboxylates, les acides gras éthoxylés, les sarcosinates, les esters phosphates, les sulfates comme les sulfates d'alcool les sulfates d'éther alcool et les éthoxylates d'alcanolamide sulfatés, les sulfonates comme les sulfosuccinates, les alkyl benzène ou alkyl naphtalène sulfonates.

Comme tensioactif non ionique on peut mentionner les tensioactifs acétyléniques, les éthoxylates d'alcool, les alcanolamides, les oxydes d'amine, les alcanolamides éthoxylés, les amines éthoxylées à longues chaînes, les copolymères oxyde d'éthylène/oxide de propylène, les dérivés du sorbiatan, l'éthylène glycol, le propylène glycol, le glycérol, les esters polyglyceryle et leurs dérivés éthoxylés, les alkylamines, les alkylimidazolines, les huiles éthoxylées et les éthoxylates d'alkylphénol. On peut citer notamment les produits vendus sous les marques IGEPAL®, DOWANOL®, RHODAMOX® et ALKAMIDE®.

En ce qui concerne les acides carboxyliques, on peut utiliser notamment les acides mono- ou dicarboxyliques aliphatiques et parmi ceux-ci plus particulièrement les acides saturés. On peut utiliser aussi des acides gras et plus particulièrement les acides gras saturés. On peut citer ainsi notamment les acides formique, acétique, proprionique, butyrique, isobutyrique, valérique, caproïque, caprylique, caprique, laurique, myristique, palmitique. Comme acides dicarboxyliques, on peut mentionner les acides oxalique, malonique, succinique, glutarique, adipique, pimélique, subérique, azélaïque et sébacique.

Les sels des acides carboxyliques peuvent aussi être utilisés, notamment les sels ammoniacaux.

A titre d'exemple, on peut citer plus particulièrement l'acide laurique et le laurate d'ammonium.

Enfin, il est possible d'utiliser un tensioactif qui est choisi parmi ceux du type éthoxylats d'alcools gras carboxyméthylés.

Par produit du type éthoxylats d'alcool gras carboxyméthylés on entend les produits constitués d'alcools gras éthoxylés ou propoxylés comportant en bout de chaîne un groupement CH₂-COOH.

Ces produits peuvent répondre à la formule : 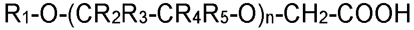 dans laquelle R₁ désigne une chaîne carbonée, saturée ou insaturée, dont la longueur est généralement d'au plus 22 atomes de carbone, de préférence d'au moins 12 atomes de carbone; R₂, R₃, R₄ et R₅ peuvent être identiques et représenter l'hydrogène ou encore R₂ peut représenter un groupe CH₃ et R₃, R₄ et R₅ représentent l'hydrogène; n est un nombre entier non nul pouvant aller jusqu'à 50 et plus particulièrement compris entre 5 et 15, ces valeurs étant incluses. On notera qu'un tensio-actif peut être constitué d'un mélange de produits de la formule ci-dessus pour lesquels R₁ peut être saturé et insaturé respectivement ou encore des produits comportant à la fois des groupements -CH₂-CH₂-O- et -C(CH₃)-CH₂-O-.

L'addition du tensio-actif peut se faire de deux manières. Il peut être ajouté directement dans la suspension de précipité issue de l'étape précédente de chauffage (c). Il peut aussi être ajouté au précipité solide après séparation de celui-ci par tout moyen connu du milieu dans lequel a eu lieu le chauffage.

La quantité de tensio-actif utilisée, exprimée en pourcentage en masse d'additif par rapport à la masse de la composition calculée en oxyde, est généralement comprise entre 5% et 100% plus particulièrement entre 15% et 60%.

Selon une variante de mise en œuvre du procédé, il est possible de soumettre le précipité en suspension à un broyage d'énergie moyenne en soumettant cette suspension à un cisaillement, par exemple en utilisant un broyeur colloïdal ou une turbine d'agitation.

Dans une dernière étape du procédé selon l'invention, le précipité récupéré est ensuite calciné. Cette calcination permet de développer la cristallinité du produit formé et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en œuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 300 et 1000°C.

Les compositions de l'invention telles que décrites plus haut ou telles qu'obtenues dans le procédé étudié précédemment se présentent sous forme de poudres mais elles peuvent éventuellement être mises en forme pour se présenter sous forme de granulés, billes, cylindres ou nids d'abeille de dimensions variables.

Les compositions de l'invention peuvent être utilisées comme catalyseurs ou supports de catalyseur. Ainsi, l'invention concerne aussi des systèmes catalytiques comprenant les compositions de l'invention. Pour de tels systèmes, ces compositions peuvent ainsi être appliquées sur tout support utilisé habituellement dans le domaine de la catalyse, c'est à dire notamment des supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques comprenant un revêtement (wash coat) à propriétés catalytiques et à base de ces compositions, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Ces systèmes catalytiques et plus particulièrement les compositions de l'invention peuvent trouver de très nombreuses applications. Ils sont ainsi particulièrement bien adaptés à, et donc utilisable dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion, l'oxydation catalytique des suies émises par les moteurs à combustion interne comme les moteurs diesel ou essence fonctionnant en régime pauvre. Les systèmes catalytiques et les compositions de l'invention peuvent enfin être utilisés comme pièges à NOx.

Dans le cas de ces utilisations en catalyse, les compositions de l'invention sont employées en combinaison avec des métaux précieux, elles jouent ainsi le rôle de support pour ces métaux. La nature de ces métaux et les techniques d'incorporation de ceux-ci dans les compositions supports sont bien connues de l'homme du métier. Par exemple, les métaux peuvent être le platine, le rhodium, le palladium ou l'iridium, ils peuvent notamment être incorporés aux compositions par imprégnation.

Parmi les utilisations citées, le traitement des gaz d'échappement des moteurs à combustion interne (catalyse post combustion automobile) constitue une application particulièrement intéressante. De ce fait, l'invention concerne aussi un procédé de traitement des gaz d'échappement des moteurs à combustion interne qui est caractérisé en ce qu'on utilise à titre de catalyseur un système catalytique tel que décrit ci-dessus ou une composition selon l'invention et telle que décrite précédemment.

Des exemples vont maintenant être donnés.

### EXEMPLE 1

Cet exemple concerne la préparation d'une composition à base d'oxyde de cérium et d'oxyde de zirconium dans les proportions respectives en masse de 58/42.

Dans un bêcher agité, on introduit 525 ml de nitrate de zirconium (80g/l) et 230 ml d'une solution de nitrate cérique (Ce⁴⁺ = 236,5 g/l, Ce³⁺ = 15,5 g/l et acidité libre = 0,7N). On complète ensuite avec de l'eau distillée de façon à obtenir 1 litre d'une solution de nitrates.

Dans un réacteur agité à fond rond, on introduit 253 ml d'une solution d'ammoniaque et on complète ensuite avec de l'eau distillée de façon à obtenir un volume total de 1 litre.

La solution de nitrates est introduite en une heure dans le réacteur sous agitation constante.

La solution obtenue est placée dans un autoclave en acier inoxydable équipé d'un mobile d'agitation. La température du milieu est portée à 150°C pendant 2 heures sous agitation.

La suspension ainsi obtenue est alors filtrée sur Büchner. On récupère un précipité contenant 23,4 % en masse d'oxyde.

On prélève 100 g de ce précipité.

Parallèlement, on a préparé un gel de laurate d'ammonium dans les conditions suivantes : on introduit 250 g d'acide laurique dans 135 ml d'ammoniaque (12 mol/l) et 500 ml d'eau distillée, puis on homogénéise à l'aide d'une spatule.

28 g de ce gel sont ajoutés à 100 g du précipité puis l'ensemble est malaxé jusqu'à obtention d'une pâte homogène.

Le produit obtenu est ensuite porté à 650°C pendant 2 heures en palier.

On indique ci-dessous les surfaces obtenues après calcinations ultérieures à différentes températures.
4h 900°C = 49 m²/g
4h 1000°C = 31 m²/g
4h 1100°C = 15 m²/g
10h 1200°C = 4 m²/g

### EXEMPLE 2

Cet exemple concerne la préparation d'une composition à base d'oxydes de cérium, de zirconium, de lanthane et de praséodyme dans les proportions respectives en masse de 60%, 30%, 3% et 7%.

Dans un bêcher agité, on introduit 375 ml de nitrate de zirconium (80g/l), 121 ml de nitrate de cérium à l'état d'oxydation III (496 g/l), 6,6 ml de nitrate de lanthane (454 g/l) et 14 ml de nitrate de praséodyme (500 g/l). On complète ensuite avec de l'eau distillée de façon à obtenir 1 litre d'une solution de nitrates.

Dans un réacteur agité à fond rond, on introduit 200 ml d'une solution d'ammoniaque (12 mol/l), 302 ml d'eau oxygénée (110 volumes) et on complète ensuite avec de l'eau distillée de façon à obtenir un volume total de 1 litre.

On procède ensuite comme dans l'exemple 1 et la suspension obtenue à l'issue du traitement en autoclave est alors filtrée sur Büchner. On récupère un précipité contenant 30,5 % en masse d'oxyde.

On prélève 100 g de ce précipité et on y ajoute 36,5 g d'un gel de laurate d'ammonium préparé comme dans l'exemple 1, jusqu'à obtention d'une pâte homogène.

Le produit obtenu est ensuite porté à 650°C pendant 2 heures en palier.

On indique ci-dessous les surfaces obtenues après calcinations ultérieures à différentes températures.
4h 900°C = 65 m²/g
4h 1000°C = 42 m²/g
4h 1100°C = 23 m²/g
10h 1200°C = 4 m²/g

## Revendications

1. Composition à base d'oxyde de cérium et d'oxyde de zirconium dans un rapport atomique Ce/Zr d'au moins 1, **caractérisée en ce qu'**elle :
- consiste essentiellement en un oxyde de cérium et en un oxyde de zirconium et présente après calcination 4 heures à 1100°C une surface spécifique d'au moins 15 m²/g ; ou bien
- est à base d'un oxyde de cérium, d'un oxyde de zirconium et d'au moins un oxyde d'une terre rare autre que le cérium et présente après calcination 4 heures à 1100°C une surface spécifique d'au moins 19 m²/g,
la surface spécifique étant une surface spécifique B.E.T. déterminée par adsorption d'azote conformément à la norme ASTM D 3663-78.

2. Composition consistant essentiellement en un oxyde de cérium et en un oxyde de zirconium selon la revendication 1 présentant après calcination 4 heures à 900°C une surface d'au moins 45 m²/g.

3. Composition consistant essentiellement en un oxyde de cérium et en un oxyde de zirconium selon la revendication 1 ou 2 présentant après calcination 4 heures à 1000°C une surface d'au moins 20 m²/g.

4. Composition selon l'une des revendications 1 à 3, **caractérisée en ce qu'**elle consiste essentiellement en un oxyde de cérium et en un oxyde de zirconium et **en ce qu'**elle présente après calcination 4 heures à 1200°C une surface spécifique d'au moins 2 m²/g, plus particulièrement d'au moins 4 m²/g.

5. Composition selon la revendication 1, **caractérisée en ce qu'**elle est à base d'un oxyde de cérium, d'un oxyde de zirconium et d'au moins un oxyde d'une terre rare autre que le cérium et **en ce qu'**elle présente après calcination 4 heures à 900°C une surface d'au moins 60 m²/g.

6. Composition à base d'un oxyde de cérium, d'un oxyde de zirconium et d'au moins un oxyde d'une terre rare autre que le cérium selon la revendication 1 ou 5 présentant une surface spécifique d'au moins 35 m²/g après calcination 4 heures à 1000°C.

7. Composition selon la revendication 1 ou 5 ou 6, **caractérisée en ce qu'**elle est à base d'un oxyde de cérium, d'un oxyde de zirconium et d'au moins un oxyde d'une terre rare autre que le cérium et **en ce qu'**elle présente après calcination 4 heures à 1200°C une surface spécifique d'au moins 3 m²/g, de préférence d'au moins 4 m²/g, plus particulièrement d'au moins 6 m²/g.

8. Composition à base d'un oxyde de cérium, d'un oxyde de zirconium et d'au moins un oxyde d'une terre rare autre que le cérium selon l'une des revendications 1 ou 5 à 7, **caractérisée en ce qu'**elle présente une teneur en oxyde d'une terre rare autre que le cérium d'au plus 20% en masse.

9. Composition à base d'un oxyde de cérium, d'un oxyde de zirconium et d'au moins un oxyde d'une terre rare autre que le cérium selon l'une des revendications 1 ou 5 à 8, **caractérisée** la terre rare autre que le cérium est choisie parmi l'yttrium, le lanthane, le néodyme, le praséodyme et leur combinaison.

10. Procédé de préparation d'une composition selon l'une des revendications précédentes, **caractérisé en ce qu'**il comprend les étapes suivantes :
- (a) on forme un mélange comprenant des composés du cérium, du zirconium et, le cas échéant, de la terre rare précitée;
- (b) on met en présence ledit mélange avec un composé basique ce par quoi on obtient un précipité;
- (c) on chauffe en milieu aqueux ledit précipité à une température d'au moins 100°C;
- (d) on ajoute au précipité obtenu à l'étape précédente un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e) on calcine le précipité ainsi obtenu.

11. Procédé selon la revendication 10, **caractérisé en ce qu'**on utilise comme composés du zirconium, du cérium et de la terre rare précitée un composé choisi parmi les nitrates, les acétates, les chlorures, les nitrates céri-ammoniacaux.

12. Procédé selon la revendication 10 ou 11, **caractérisé en ce qu'**on utilise dans le mélange de l'étape (a) un composé du cérium dans lequel celui-ci est sous forme de Ce III et on ajoute un agent oxydant lors de l'étape (a) ou lors de l'étape (b), notamment à la fin de celle-ci.

13. Procédé selon l'une des revendications 10 à 12, **caractérisé en ce que** le chauffage du précipité de l'étape (c) est réalisé à une température d'au moins 130°C.

14. Système catalytique, **caractérisé en ce qu'**il comprend un revêtement à base d'une composition selon l'une des revendications 1 à 9, sur un substrat.

15. Procédé de traitement des gaz d'échappement des moteurs à combustion interne, **caractérisé en ce qu'**on utilise à titre de catalyseur un système catalytique selon la revendication 14 ou une composition selon l'une des revendications 1 à 9.

## Patentansprüche

1. Zusammensetzung auf Basis von Ceroxid und Zirconiumoxid in einem Ce/Zr-Atomverhältnis von mindestens 1, **dadurch gekennzeichnet, dass** sie:
- im Wesentlichen aus einem Ceroxid und einem Zirconiumoxid besteht und nach 4 Stunden Calcinierung bei 1100 °C eine spezifische Oberfläche von mindestens 15 m²/g aufweist oder auch
- auf einem Ceroxid, einem Zirconiumoxid und mindestens einem Oxid eines anderen Seltenerdmetalls als Cer basiert und nach 4 Stunden Calcinierung bei 1100 °C eine spezifische Oberfläche von mindestens 19 m²/g aufweist,
wobei es sich bei der spezifischen Oberfläche um eine durch Stickstoffabsorption gemäß ASTM-Norm D 3663-78 bestimmte spezifische BET-Oberfläche handelt.

2. Zusammensetzung nach Anspruch 1, die im Wesentlichen aus einem Ceroxid und einem Zirconiumoxid besteht und nach 4 Stunden Calcinierung bei 900 °C eine spezifische Oberfläche von mindestens 45 m²/g aufweist.

3. Zusammensetzung nach Anspruch 1 oder 2, die im Wesentlichen aus einem Ceroxid und einem Zirconiumoxid besteht und nach 4 Stunden Calcinierung bei 1000 °C eine spezifische Oberfläche von mindestens 20 m²/g aufweist.

4. Zusammensetzung nach einem der Ansprüche 1 bis 3, **dadurch gekennzeichnet, dass** sie im Wesentlichen aus einem Ceroxid und einem Zirconiumoxid besteht und nach 4 Stunden Calcinierung bei 1200 °C eine spezifische Oberfläche von mindestens 2 m²/g, spezieller mindestens 4 m²/g, aufweist.

5. Zusammensetzung nach Anspruch 1, **dadurch gekennzeichnet, dass** sie auf einem Ceroxid, einem Zirconiumoxid und mindestens einem Oxid eines anderen Seltenerdmetalls als Cer basiert und nach 4 Stunden Calcinierung bei 900 °C eine spezifische Oberfläche von mindestens 60 m²/g aufweist.

6. Zusammensetzung nach Anspruch 1 oder 5, die auf einem Ceroxid, einem Zirconiumoxid und mindestens einem Oxid eines anderen Seltenerdmetalls als Cer basiert ist und nach 4 Stunden Calcinierung bei 1000 °C eine spezifische Oberfläche von mindestens 35 m²/g aufweist.

7. Zusammensetzung nach Anspruch 1 oder 5 oder 6, **dadurch gekennzeichnet, dass** sie auf einem Ceroxid, einem Zirconiumoxid und mindestens einem Oxid eines anderen Seltenerdmetalls als Cer basiert und dass sie nach 4 Stunden Calcinierung bei 1200 °C eine spezifische Oberfläche von mindestens 3 m²/g, spezieller mindestens 6 m²/g, aufweist.

8. Zusammensetzung nach Anspruch 4 oder 5 bis 7, die sie auf einem Ceroxid, einem Zirconiumoxid und mindestens einem Oxid eines anderen Seltenerdmetalls als Cer basiert ist, **dadurch gekennzeichnet, dass** sie einen Gehalt an Oxid eines anderen Seltenerdmetalls als Cer von höchstens 20 Massen-% aufweist.

9. Zusammensetzung nach Anspruch 4 oder 5 bis 8, die sie auf einem Ceroxid, einem Zirconiumoxid und mindestens einem Oxid eines anderen Seltenerdmetalls als Cer basiert ist, **dadurch gekennzeichnet, dass** das andere Seltenerdmetall als Cer aus Yttrium, Lanthan, Neodym und Praseodym ausgewählt ist.

10. Verfahren zur Herstellung einer Zusammensetzung nach einem der vorhergehenden Ansprüche, **dadurch gekennzeichnet, dass** man:
- (a) eine Mischung bildet, die Verbindungen von Cer, Zirconium und gegebenenfalls dem oben aufgeführten Seltenerdmetall umfasst;
- (b) die Mischung mit einer basischen Verbindung in Kontakt bringt, wodurch man einen Niederschlag erhält;
- (c) den Niederschlag in wässrigem Medium in einer geschlossenen Kammer auf eine Temperatur von mindestens 100 °C erhitzt;
- (d) den im vorhergehenden Schritt erhaltenen Niederschlag mit einem aus anionischen Tensiden, nichtionischen Tensiden, Polyethylenglykolen, Carbonsäuren und deren Salzen und Tensiden des Typs carboxymethyliertes Fettalkoholethoxylat ausgewählten Tensid versetzt;
- (e) den so erhaltenen Niederschlag calciniert.

11. Verfahren nach Anspruch 10, **dadurch gekennzeichnet, dass** man als Verbindungen von Zirconium, Cer und dem oben aufgeführten Seltenerdmetall eine aus Nitraten, Acetaten, Chloriden und Cerammoniumnitraten ausgewählte Verbindung verwendet.

12. Verfahren nach Anspruch 10 oder 11, **dadurch gekennzeichnet, dass** man in der Mischung aus Schritt (a) eine Cerverbindung verwendet, wobei diese in Form von Ce(III) vorliegt, und während Schritt (a) oder während Schritt (b), insbesondere an dessen Ende, ein Oxidationsmittel zusetzt.

13. Verfahren nach einem der Ansprüche 10 bis 12, **dadurch gekennzeichnet, dass** das Erhitzen des Niederschlags in Schritt (c) bei einer Temperatur von mindestens 130 °C durchgeführt wird.

14. Katalytisches System, **dadurch gekennzeichnet, dass** es eine Beschichtung auf der Basis einer Zusammensetzung nach einem der Ansprüche 1 bis 9 auf einem Substrat umfasst.

15. Verfahren zur Behandlung von Abgasen von Verbrennungsmotoren, **dadurch gekennzeichnet, dass** man als Katalysator ein katalytisches System nach Anspruch 14 oder eine Zusammensetzung nach einem der Ansprüche 1 bis 9 verwendet.

## Claims

1. Composition based on cerium oxide and zirconium oxide in a Ce/Zr atomic ratio of at least 1, **characterized in that** said composition:
- consists essentially of a cerium oxide and of a zirconium oxide and has a specific surface area of at least 15 m²/g after calcination at 1100°C for 4 hours; or
- is based on a cerium oxide, on a zirconium oxide and on at least one oxide of a rare earth other than cerium and has a specific surface area of at least 19 m²/g after calcination at 1100°C for 4 hours,
the specific surface area being a BET specific surface area determined by nitrogen adsorption in accordance with the ASTM D 3663-78 standard.

2. Composition according to Claim 1 consisting essentially of a cerium oxide and of a zirconium oxide and having a surface area of at least 45 m²/g after calcination at 900°C for 4 hours.

3. Composition according to Claim 1 or 2 consisting essentially of a cerium oxide and of a zirconium oxide and having a surface area of at least 20 m²/g after calcination at 1000°C for 4 hours.

4. Composition according to any one of Claims 1 to 3, **characterized in that** it consists essentially of a cerium oxide and of a zirconium oxide and **in that** it has a specific surface area of at least 2 m²/g, more particularly of at least 4 m²/g, after calcination at 1200°C for 4 hours.

5. Composition according to Claim 1, **characterized in that** it is based on a cerium oxide, on a zirconium oxide and on at least one oxide of a rare earth other than cerium and **in that** it has a surface area of at least 60 m²/g after calcination at 900°C for 4 hours.

6. Composition according to Claim 1 or 5, **characterized in that** it is based on a cerium oxide, on a zirconium oxide and on at least one oxide of a rare earth other than cerium and **in that** it has a surface area of at least 35 m²/g after calcination at 1000°C for 4 hours.

7. Composition according to Claim 1 or 5 or 6, **characterized in that** it is based on a cerium oxide, on a zirconium oxide and on at least one oxide of a rare earth other than cerium and **in that** it has a surface area of at least 3 m²/g, preferably at least 4 m²/g, more particularly at least 6 m²/g, after calcination at 1200°C for 4 hours.

8. Composition according to Claim 4 or 5 to 7 which is based on a cerium oxide, on a zirconium oxide and on at least one oxide of a rare earth other than cerium and is **characterized in that** it has a content of an oxide of a rare earth other than cerium is at most 20% by weight.

9. Composition according to Claim 4 or 5 to 8 which is based on a cerium oxide, on a zirconium oxide and on at least one oxide of a rare earth other than cerium and is **characterized in that** the rare earth other than cerium is chosen from yttrium, lanthanum, neodymium and praseodymium.

10. Method for preparing a composition according to one of the preceding claims, **characterized in that** it comprises the following steps:
- (a) forming a mixture comprising compounds of cerium, of zirconium and, where applicable, of the aforementioned rare earth;
- (b) bringing a mixture into contact with a basic compound, by means of which a precipitate is obtained;
- (c) heating said precipitate in an aqueous medium to a temperature of at least 100°C;
- (d) adding an additive, chosen from anionic surfactants, nonionic surfactants, polyethylene glycols, carboxylic acids and their salts, and surfactants of carboxymethylated fatty alcohol ethoxylate type, to the precipitate obtained in the previous step;
- (e) calcining the precipitate thus obtained.

11. Method according to Claim 10, **characterized in that** as the compounds of zirconium, of cerium and of the aforementioned rare earth, a compound chosen from nitrates, acetates, chlorides and ceric ammonium nitrates is used.

12. Method according to Claim 10 or 11, **characterized in that**, in the mixture of step (a), a cerium compound is used in which cerium is in the Ce(III) form and an oxidizing agent is added during step (a) or during step (b), especially at the end of the latter step.

13. Method according to one of Claims 10 to 12, **characterized in that** the precipitate is heated in step (c) to a temperature of at least 130°C.

14. Catalytic system, **characterized in that** it comprises a coating based on a composition according to one of Claims 1 to 9, on a substrate.

15. Method for treating the exhaust gases of internal combustion engines, **characterized in that** a catalytic system according to Claim 14 or a composition according to one of Claims 1 to 9 is used as catalyst.
